# EUROPÄISCHE PATENTSCHRIFT

(11) **EP 4 053 341 B1**
(45) Veröffentlichungstag und Bekanntmachung des Hinweises auf die Patenterteilung: **25.09.2024**
(21) Anmeldenummer: 21160899.7
(22) Anmeldetag: 05.03.2021
(51) Int. Cl.: E01F 8/00

(54) **AUFSATZELEMENT FÜR LÄRMSCHUTZWAND**
ATTACHMENT ELEMENT FOR NOISE BARRIER
ÉLÉMENT RAPPORTÉ POUR UNE PAROI ANTIBRUIT

(43) Veröffentlichungstag der Anmeldung: 07.09.2022
(73) Patentinhaber: Leube Betonteile GmbH & Co KG, 5751 Maishofen (AT)
(72) Erfinder: Kerschbaumer, Peter, 8940 Liezen (AT)
(74) Vertreter: Patentanwälte Barger, Piso & Partner

(56) Entgegenhaltungen:
- EP-A2- 2 489 962
- WO-A1-2010/073274
- DE-A1- 19 645 683
- FR-A1- 2 778 487

## Beschreibung

Die Erfindung bezieht sich auf ein Aufsatzelement für Lärmschutzwand, mit einem im wesentlichen prismatischen Körper, der einen Kopfabschnitt mit im wesentlichen trapezförmigem Querschnitt aufweist, von dessen Schmalseite ein Wandabschnitt mit im wesentlichen Rechteckquerschnitt nach unten absteht.

Derartige Aufsatzelemente wie in FR2778487A sind schon einige Zeit, vor allem bei Lärmschutzwänden entlang von Autobahnen, in Verwendung, da durch den sich nach oben verbreiternden Kopfabschnitt eine verbesserte Schallabschirmwirkung erzielt wird.

Es gehören auch schon Lärmschutzwände mit integrierten Photovoltaikpaneelen zum Stand der Technik. Diese sind meist vertikal im oberen Bereich von durchsichtigen Lärmschutzwänden angebracht. Derartige Lärmschutzwände haben aber den Nachteil, dass nicht die gesamte, der Schallquelle zugewandte Fläche für die Schallabsorption zur Verfügung steht und die Solarpaneele überdies den Schall noch reflektieren. WO2010/073274A zeigt eine Trageinrichtung aus Blech mit daran montierten Photovoltaikpaneelen, die am oberen Ende einer Lärmschutzwand befestigt wird.

In jüngster Zeit ist man bei Solaranlagen bereits dazu übergegangen, fix montierte Solarpaneele nicht bloß unter 30-50° Neigung im wesentlichen Richtung Süden - auf der Nordhalbkugel - auszurichten, sondern sie auch, weitgehend richtungsunabhängig, im wesentlichen horizontal, z.B. auf Flachdächern, zu montieren.

Ziel der Erfindung ist es, Lärmschutzwände mit weitgehend richtungsunabhängig wirksamen Solarpaneelen zu versehen, ohne die Fläche mit Schallschluckeigenschaften zu verringern, um - vor allem längs Autobahnen - das Potential der Gewinnung von Solarenergie optimal, also unabhängig von der geografischen Ausrichtung der Wände, ausbeuten zu können.

Dieses Ziel wird mit einem eingangs genannten Aufsatzelement erfindungsgemäß dadurch erreicht, dass an der Breitseite des Kopfabschnitts ein sich im wesentlichen über die Länge des prismatischen Körpers erstreckendes, die Breitseite überdeckendes Solarpaneel befestigt ist, wobei die Befestigung des Solarpaneels mit längs gegenüberliegenden Rändern der Breitseite des Kopfabschnitts voneinander distanziert angeordneten, vorzugsweise punktförmigen, Auflagern erfolgt, und unterhalb des Solarpaneels zwischen den gegenüberliegenden Auflagern eine Verkabelung vorgesehen ist.

Ein solches, an seiner Oberseite mit einem Solarpaneel versehenes Aufsatzelement ist neu und kann originär bei Neuerrichtung einer Lärmschutzwand oder austauschweise bei einer bereits in Verwendung stehenden Lärmschutzwand eingesetzt werden. Die Übernahme der bei Flachdächern bereits bekannten Maßnahme auf Lärmschutzwände war keineswegs naheliegend, da erstere im Wesentlichen horizontal, letztere dagegen im Wesentlichen vertikal angeordnet sind, weshalb ja bislang die Photovoltaikpaneele an ihnen auch nur vertikal montiert wurden.

Im Einklang mit der Erfindung erfolgt die Befestigung des Solarpaneels mit längs gegenüberliegenden Rändern der Breitseite des Kopfabschnitts voneinander distanziert angeordneten, vorzugsweise punktförmigen, Auflagern. Dann liegt nämlich das Solarpaneel nicht satt und direkt an der Oberseite des Aufsatzelements an, sodass einerseits zwischen der Oberseite und dem Solarpaneel eine Luftzirkulation ermöglicht wird, anderseits witterungsbedingte Maßänderungen kompensiert werden können. Ein Abstand zwischen der Unterseite des Solarpaneels und der Oberseite des Kopfabschnitts des Aufsatzelements ist auch insoweit zweckmäßig, weil dann Raum vorhanden ist, um die für das Photovoltaikpaneel erforderlichen Verkabelung unterzubringen. Bei Errichtung einer aus aneinander gereihten Elementen bestehenden Lärmschutzwand oder bei Austausch der Aufsatzelemente gegen solche, die mit Solarpaneelen versehen sind, können somit die Verkabelungen benachbarter Elemente einfach miteinander verbunden werden - es bedarf also keines zusätzlichen Verkabelungsaufwands.

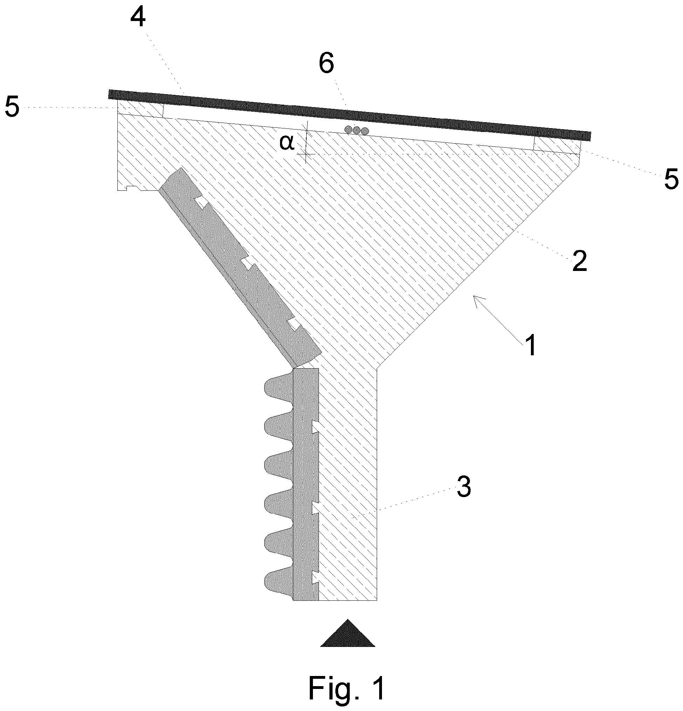

Um die Ausbeute der eingestrahlten Sonnenenergie zu erhöhen, kann es in manchen Anwendungsbereichen, z.B. entlang gewisser Autobahnabschnitte, günstig sein, wenn das Solarpaneel nicht exakt horizontal, sondern max. 5° gegen die Horizontale geneigt ausgerichtet ist. Die Erfindung wird im Folgenden anhand eines Ausführungsbeispiels näher erläutert. Fig. 1 zeigt einen Querschnitt durch ein Aufsatzelement einer Lärmschutzwand, das erfindungsgemäß mit einem Solarpaneel versehen ist.

Das Aufsatzelement weist einen im Wesentlichen prismatischen Körper 1 mit einem Kopfabschnitt 2 und einen Wandabschnitt 3 auf. Der Querschnitt des Kopfabschnitts ist im Wesentlichen trapezförmig, jener des Wandabschnitts 3 im Wesentlichen rechteckförmig. Der Wandabschnitt 3 steht von der Schmalseite des Kopfabschnitts 2 nach unten ab. An der oben befindlichen Breitseite des Kopfabschnitts 2 ist ein Solarpaneel 4 befestigt, das sich über die Gesamtlänge (z.B. mehrere Meter) des Körpers 1 erstreckt und die Breitseite von dessen Kopfabschnitt 2 überdeckt.

Das Solarpaneel 4 ruht auf im Wesentlichen punktförmigen Auflagen 5, die an den gegenüberliegenden Rändern der Breitseite des Kopfabschnitts 2 in Längsrichtung des Körpers 1 voneinander distanziert angeordnet sind. Zwischen den einander gegenüberliegenden Auflagen 5 ist unterhalb des Solarpaneels 4 eine Verkabelung 6 vorgesehen. Das Solarpaneel 4 schließt - im Verwendungszustand - mit der Horizontalen einen Winkel α ein, der maximal 5° beträgt.

Der Körper 1 kann aus Beton oder sonst einem geeigneten Material bestehen und - wie im beispielhaft dargestellten Fall - an der der Schallquelle zugewandten Seite mit schallabsorbierenden Auflagen versehen sein (in Fig. 1 auf der linken Seite des dargestellten Querschnitts).

Werden erfindungsgemäß ausgestattete Aufsatzelemente bei Neuerrichtung von Lärmschutzwänden oder bei Austausch von deren Aufsatzelementen eingesetzt, kann nicht nur Solarenergie gewonnen, sondern - im Vergleich zu Lärmschutzwänden mit vertikal angeordneten Solarpaneelen - auch ein verbesserter Lärmschutz erzielt werden, weil die Solarpaneele die dem Schall ausgesetzten Flächen der Lärmschutzwände durch ihre Orientierung nach oben nicht verringern.

## Patentansprüche

1. ufsatzelement für Lärmschutzwand, mit einem im wesentlichen prismatischem Körper (1), der einen Kopfabschnitt (2) mit im wesentlichem trapezförmigen Querschnitt aufweist, von dessen Schmalseite ein Wandabschnitt (3) mit im wesentlichen Rechteckquerschnitt nach unten absteht, **dadurch gekennzeichnet, dass** an der Breitseite des Kopfabschnitts (2) ein sich über die Gesamtlänge des prismatischen Körpers (1) erstreckendes, die Breitseite überdeckendes Solarpaneel (4) befestigt ist, wobei die Befestigung des Solarpaneels (4) mit längs gegenüberliegenden Rändern der Breitseite des Kopfabschnitts (2) voneinander distanziert angeordneten, vorzugsweise punktförmigen, Auflagern (5) erfolgt, und unterhalb des Solarpaneels (4) zwischen den gegenüberliegenden Auflagern eine Verkabelung (6) vorgesehen ist.

## Claims

1. ttachment element for a noise protection wall, having an essentially prismatic body (1) which has a head portion (2) with an essentially trapezoidal cross-section, from the narrow side of which a wall portion (3) with an essentially rectangular cross-section projects downwards, **characterised in that** a solar panel (4) extending over the entire length of the prismatic body (1) is fastened to the broad side of the head portion (2), the fastening of the solar panel (4) being effected by preferably punctiform supports (5) spaced from one another along opposite edges of the broad side of the head portion (2), whereby a cabling (6) is provided below the solar panel (4) between the opposite supports.

## Revendications

1. Élément rapporté destiné à une paroi antibruit, comprenant un corps (1) sensiblement prismatique qui présente une partie de tête (2) de section sensiblement trapézoïdale, avec une petite base à partir de laquelle une partie de paroi (3), de section sensiblement rectangulaire, s'étend vers le bas, **caractérisé en ce que** sur la grande base de la partie de tête (2), est fixé un panneau solaire (4) qui s'étend sur toute la longueur du corps (1) prismatique en recouvrant la grande base, la fixation du panneau solaire (4) s'effectuant avec des supports (5), de préférence ponctuels, qui sont disposés le long de bords opposés de la grande base de la partie de tête (2), à distance les uns des autres, et un câblage (6) étant prévu sous le panneau solaire (4), entre les supports opposés.
